# EUROPÄISCHE PATENTANMELDUNG

(11) **EP 0 913 114 A1**
(43) Veröffentlichungstag der Anmeldung: **06.05.1999**
(21) Anmeldenummer: 98117730.6
(22) Anmeldetag: 18.09.1998
(51) Int. Cl.: A47J 41/00

(54) **Isolierflasche**

(30) Priorität: 29.10.1997 DE 19747669
(71) Anmelder: LEIFHEIT Aktiengesellschaft, D-56377 Nassau (DE)
(72) Erfinder: Schülein, Rolf Günter, 56379 Singhofen (DE); Bergmann, Guido, 56377 Nassau (DE)

(57) **Zusammenfassung**

Eine Isolierflasche weist einen Trinkbecher (8) auf, der anstelle eines Henkels einen wärmeisolierenden Umfangsbereich hat, der z.B. von einem auf den Außenumfang des Trinkbechers aufgesetzten Griffring (10) gebildet ist, welcher zur Wärmeisolierung an seiner Innenfläche mit zum Außenumfang des Trinkbechers hin offenen Umfangsnuten versehen ist.

## Beschreibung

Die Erfindung bezieht sich auf eine Isolierflasche entsprechend dem Oberbegriff des Anspruchs 1.

Bei bekannten Isolierflaschen der gattungsgemäßen Art ist der Trinkbecher häufig mit einem Henkel versehen, um die Hand beim Ergreifen des Trinkbechers nicht der Temperatur des Becherinhaltes auszusetzen. Ein derartiger Henkel ist jedoch bei der Aufbewahrung und beim Transport der Isolierflasche störend. Außerdem hat die Isolierflasche einen verhältnismäßig großen Durchmesser, wenn der Glaskolben ein größeres Volumen hat, wodurch es oftmals, vor allem für Kinder, schwierig ist, die Isolierflasche insbesondere im voll gefüllten Zustand mit einer Hand zu halten.

Aufgabe der Erfindung ist es, eine Isolierflasche der gattungsgemäßen Art zu schaffen, die in jeder Hinsicht griffgünstig ausgebildet ist.

Diese Aufgabe wird nach einem Aspekt der Erfindung dadurch gelöst, daß der Trinkbecher anstelle eines Henkels einen wärmeisolierenden Umfangsbereich aufweist, an dem er ergriffen und gehalten werden kann, ohne die Hand einer übermäßigen Temperatur auszusetzen.

Der wärmeisolierende Umfangsbereich kann von einem auf den Außenumfang des Trinkbechers aufgesetzten, insbesondere aufgeclipsten und gegenüber diesem wärmeisolierten Griffring gebildet sein. Die Wärmeisolierung kann dabei durch Hohlräume im Griffring erzeugt werden, die z.B von zum Außenumfang des Trinkbechers hin offenen Nuten gebildet sein können.

Alternativ kann der Trinkbecher selbst in dem zu isolierenden Umfangsbereich mit Hohlräumen versehen sein, die vorzugsweise mit dem Gas-Innendruckverfahren erzeugt werden.

Hat die Isolierflasche entsprechend dem DE-Gm 93 02 025 einen Innenbecher innerhalb des Trinkbechers, so sollte der Innenbecher ebenfalls einen wärmeisolierenden Umfangsbereich aufweisen. Der Innenbecher kann auf ein Gewinde am Gehäuseoberteil aufschraubbar sein, wobei dann der Trinkbecher vorzugsweise durch Reibung auf dem Innenbecher gehalten wird.

Nach einem anderen Aspekt der Erfindung wird die gestellte Aufgabe dadurch gelöst, daß das Gehäuse einen eingeschnürten Griffbereich aufweist. Dadurch kann auch eine größere Isolierflasche von einer kleinen Hand sicher gehalten werden. Durch Noppen oder Vertiefungen im Griffbereich kann die Handhabung zusätzlich verbessert werden.

Ein Ausführungsbeispiel der Erfindung wird im folgenden unter Bezugnahme auf die Zeichnung beschrieben. Es zeigt:
Fig. 1 eine Seitenansicht einer Isolierflasche, und
Fig. 2 einen Längsschnitt der Isolierflasche.

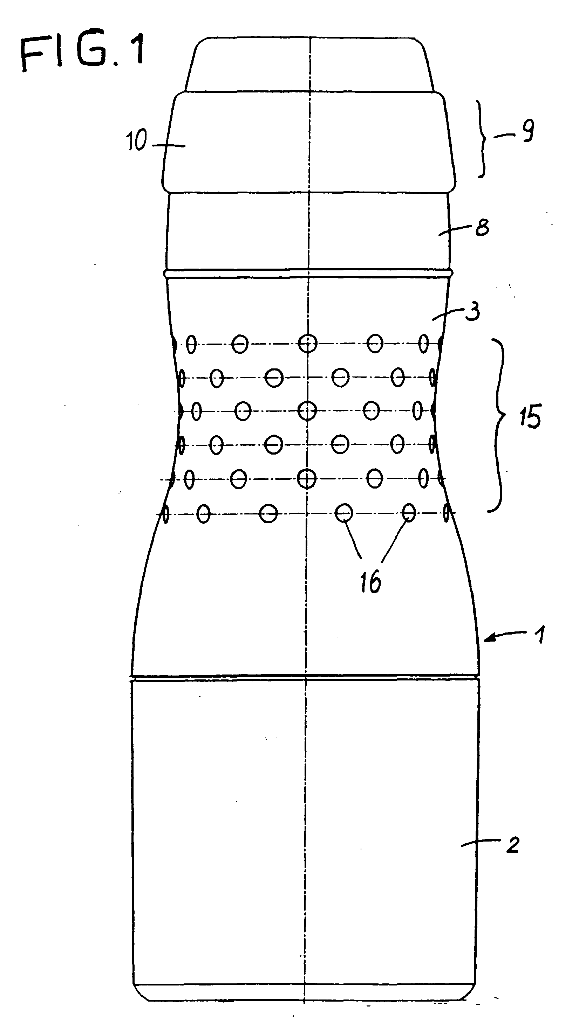

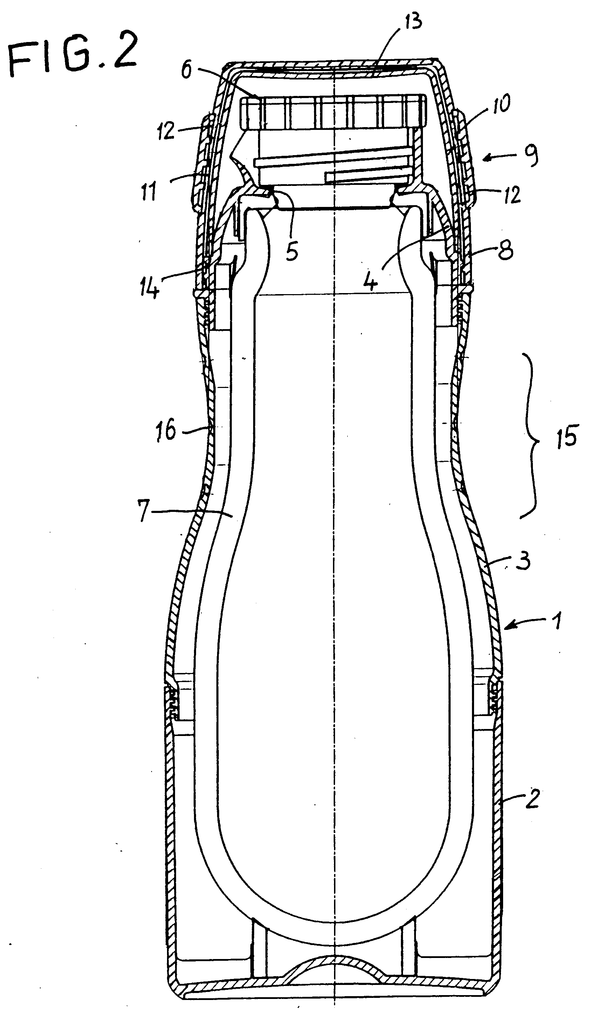

Die in Fig. 1 und 2 dargestellte Isolierflasche weist ein Gehäuse 1 auf, das sich aus einem Unterteil 2 und einem Oberteil 3 mit einem in das Oberteil eingeschraubten Hals 4 mit einer Einfüll- und Ausgießöffnung 5 zusammensetzt, die durch einen Schraubdeckel 6 verschließbar ist. In dem Gehäuse 1 ist ein doppelwandiger Glaskolben 7 angeordnet, der zu der Einfüllöffnung 5 hin offen ist. Auf den Hals 4 ist ein Trinkbecher 8 aufgeschraubt, der einen wärmeisolierenden Umfangsbereich 9 aufweist. Dieser Umfangsbereich ist im dargestellten Ausführungsbeispiel von einem Griffring 10 gebildet, der in eine umlaufende Vertiefung 11 in der Außenfläche des Trinkbechers 8 eingeclipst ist. Die Wärmeisolierung des Griffringes 10 wird dadurch bewirkt, daß dieser mit Hohlräumen 12 versehen ist, die im Ausführungsbeispiel zum Außenumfang des Trinkbechers 8 hin offen und von Nuten gebildet sind, die sich über den Innenumfang des Griffringes 10 erstrecken.

Abweichend von der dargestellten Ausführung kann anstelle des Griffringes 10 der Trinkbecher 8 selbst in demselben Umfangsbereich mit isolierenden, abgeschlossenen Hohlräumen versehen sein, die beim Spritzen des Trinkbechers durch das bekannte Gas-Innendruckverfahren erzeugt werden.

Innerhalb des Trinkbechers 8 ist ein Innenbecher 13 angeordnet, der auf einer Schulter 14 am Hals 4 sitzt. Dieser Innenbecher kann wie der Trinkbecher 8 mit einem wärmeisolierenden Umfangsbereich versehen sein. Abweichend von der dargestellten Ausführung kann der Innenbecher auf ein Gewinde am Hals 4 aufgeschraubt sein, in welchem Fall dann der Trinkbecher 8 mit Reibung auf dem Innenbecher 13 gehalten wird.

Um das Ergreifen und Halten der Isolierflasche zu erleichtern, hat das Gehäuse 1 einen eingeschnürten Griffbereich 15, der mit Vertiefungen 16 oder vorstehenden Noppen versehen ist.

## Patentansprüche

1. Isolierflasche mit einem Gehäuse (1), das ein Unterteil (2) und ein Oberteil (3) mit einem Hals (4) mit einer durch einen Deckel (6) verschließbaren Einfüllöffnung (5) aufweist und einen zur Einfüllöffnung hin offenen Glaskolben (7) aufnimmt, wobei auf das Oberteil (3) bzw. den Hals (4) ein Trinkbecher (8) aufgesetzt ist, dadurch gekennzeichnet, daß der Trinkbecher (8) einen wärmeisolierenden Umfangsbereich (9) aufweist.

2. Isolierflasche nach Anspruch 1, dadurch gekennzeichnet, daß der wärmeisolierende Umfangsbereich (9) von einem auf den Außenumfang des Trinkbechers (8) aufgesetzten und gegenüber diesem wärmeisolierten Griffring (10) gebildet ist.

3. Isolierflasche nach Anspruch 2, dadurch gekennzeichnet, daß der Griffring (10) mit Hohlräumen (12) versehen ist.

4. Isolierflasche nach Anspruch 3, dadurch gekennzeichnet, daß die Hohlräume (12) von zum Außenumfang des Trinkbechers (8) hin offenen Umfangsnuten an der Innenfläche des Griffringes (10) gebildet sind.

5. Isolierflasche nach einem der Ansprüche 2 bis 4, dadurch gekennzeichnet, daß der Griffring (10) auf die Außenfläche des Trinkbechers (8) aufgeclipst ist.

6. Isolierflasche nach Anspruch 5, dadurch gekennzeichnet, daß die Außenfläche des Trinkbechers (8) mit einer umlaufenden Vertiefung (11) versehen ist, in die der Griffring (10) eingreift.

7. Isolierflasche nach Anspruch 1, dadurch gekennzeichnet, daß der wärmeisolierende Umfangsbereich (9) des Trinkbechers (8) mit Hohlräumen versehen ist.

8. Isolierflasche nach Anspruch 7, dadurch gekennzeichnet, daß die Hohlräume durch das Gas-Innendruckverfahren erzeugt sind.

9. Isolierflasche nach einem der vorhergehenden Ansprüche mit einem Innenbecher (13) innerhalb des Trinkbechers (8), dadurch gekennzeichnet daß der Innenbecher (13) ebenfalls einen wärmeisolierenden Umfangsbereich entsprechend einem oder mehreren der Ansprüche 2 bis 8 aufweist.

10. Isolierflasche nach Anspruch 9, dadurch gekennzeichnet, daß der Innenbecher (11) auf ein Gewinde am Gehäuseoberteil (3) bzw. dessen Hals (4) aufschraubbar ist und daß der Trinkbecher (8) auf dem Innenbecher (11) durch Reibung gehalten ist.

11. Isolierflasche nach dem Oberbegriff des Anspruchs 1, dadurch gekennzeichnet, daß das Gehäuse (1) einen eingeschnürten Griffbereich (15) aufweist.

12. Isolierflasche nach Anspruch 11, dadurch gekennzeichnet, daß der eingeschnürte Griffbereich (15) mit Noppen oder Vertiefungen (16) versehen ist.
